# EUROPÄISCHE PATENTSCHRIFT

(11) **EP 0 771 605 B1**
(45) Veröffentlichungstag und Bekanntmachung des Hinweises auf die Patenterteilung: **16.11.2005**
(21) Anmeldenummer: 96115095.0
(22) Anmeldetag: 20.09.1996
(51) Int. Cl.: B23K 26/00, B23K 33/00

(54) **Laserschweissverfahren für beschichtete Stahlbleche**
Laser welding process for coated metal sheets
Procédé de soudure au laser pour des tôles revêtues

(30) Priorität: 04.11.1995 DE 19541206
(43) Veröffentlichungstag der Anmeldung: 07.05.1997
(60) Teilanmeldung: 03029397.1
(73) Patentinhaber: Volkswagen Aktiengesellschaft, 38436 Wolfsburg (DE)
(72) Erfinder: Hammer, Thorge, Dipl.-Ing., 38554 Weyhausen (DE); Herzog, Frank, Dipl.-Ing., 38442 Wolfsburg (DE); Joho, Heinz-Georg, 38462 Grafhorst (DE); Sikora, Ralf, Dipl.-Ing., 13351 Berlin (DE); Anders, Michael, Dipl.-Ing., 13407 Berlin (DE)
(74) Vertreter: Scheffler, Jörg

(56) Entgegenhaltungen:
- EP-A- 0 178 394
- EP-A- 0 200 098
- EP-A- 0 552 468
- WO-A-90/07392
- WO-A-92/11971
- DE-A- 3 815 068
- DE-A- 3 909 471
- DE-A- 19 523 005
- DE-C- 3 812 448
- US-A- 4 644 129
- US-A- 5 221 585
- PATENT ABSTRACTS OF JAPAN Bd. 016, Nr. 217 (M-1252) 21 Mai 1992 & JP 04 041 089 A (SUMITOMO METAL IND LTD) 12 Februar 1992

## Beschreibung

Die Erfindung betrifft ein Verfahren zum Verbinden zweier Stahlbleche, von denen zumindest eins eine Beschichtung mit einem niedrigen Schmelzpunkt aufweist, durch eine Laserschweißnaht. Dabei ist unter einem niedrigen Schmelzpunkt ein Schmelzpunkt zu verstehen, der deutlich niedriger liegt als der von Stahl. Die Erfindung bezieht sich insbesondere auf ein Verfahren zum Laserschweißen von zinkbeschichteten Stahlblechen, wie sie insbesondere in der Automobilindustrie zum Karosseriebau eingesetzt werden.

Die Erfindung bezieht sich weiterhin auf ein Blechbauteil, insbesondere Karosseriebauteil, das aus zumindest zwei dünnen Blechbauteilen besteht, die mittels einer erfindungsgemäß ausgeführten Schweißnaht verbunden sind.

Zu den industriell wichtigsten Fügeverfahren, insbesondere in der Automobilindustrie, zählen Schweißverfahren, bei denen zwei Stahlbleche mittels einer Laserschweißnaht verbunden werden. Es ist schwierig, Schweißnähte hoher Güter auf solchen Stahlblechen herzustellen, die mit einem korrosionsschützenden Werkstoff beschichtet sind, der einem deutlich niedrigeren Schmelzpunkt als Stahl aufweist. Wie bekannt ist, liegt dies daran daß der Beschichtungswerkstoff, beispielsweise zink, beim Schweißvorgang zunächst schmilzt und teilweise verdampft, wobei die entstehenden Dampfblasen das entstehende Stahlschmelzbad der im Entstehen befindlichen Schweißnaht stören. So kommt es beispielsweise zu Kratern in der Schweißnaht, Auswürfen und anderen Unregelmäßigkeiten. Die geschilderten Probleme beim Laserschweißen von beschichteten Stahlblechen werden in der Literatur auch unter dem Stichwort "Entgasungsproblematik" behandelt.

Es sind verschiedene Lösungsansätze vorgeschlagen worden, um die Entgasungsproblematik zu lösen. Aus der EP-PS 0 178 394 B1 ist ein Verfahren bekannt, bei dem vorgeschlagen wird, bei zwei miteinander zu verschweißenden Blechen, die in Form eines Oberlappstoßes angeordnet sind, durch entsprechende Formgestaltung der Bleche dafür Sorge zu tragen, daß der Schweißbereich mit der externen Umgebung durch wenigstens einen Durchlaß in Strömungsverbindung steht. Bei dem aus diesem Stand der Technik bekannten Verfahren ist vorgesehen, daß der Laserstrahl auf die Oberseite eines Bleches des Überlappstoßes gerichtet ist und dieses zunächst durchschweißt, bevor soviel Energie in die Schmelze eingeleitet ist, daß das Schmelzbad auch das zweite, sozusagen unten liegende Blech erreicht. Bei diesem Verfahren ist nachteilig, daß wegen des Durchschweißens eines Bleches Laserstrahlen mit hoher Leistung verwendet werden müssen. Darüber hinaus ist es bei den vorgeschlagenen Verfahren nicht möglich, eines der beiden miteinander zu verbindenden Bleche unmittelbar im Bereich seiner Kante zu verschweißen, da dann bei den vorgeschlagenen Formgebungen zum Erzeugen einer Entgasungskammer, d.h. eines Durchlasses in Strömungsrichtung, kein Ansetzen eines Klemmittels möglich wäre. Dies ist jedoch insbesondere in der automatisierten industriellen Fertigung von Schweißnähten unerläßlich.

Aus der DE-PS 38 12 448 C1 ist bekannt, ein Verbindungsbereich zweier beschichteter Dünnbleche zur Lösung der genannten Entgasungsproblematik so zu gestalten, daß die beiden dünnen Bleche entlang der Schweißnaht mit unterschiedlichen Krümmungsradien aufeinander stoßen und beidseitig der Schweißnaht voneinander beabstandet sind. Diese auch als "kissing weld" bekannte Technik setzt wiederum voraus, daß der Laserstrahl eine hohe Leistung aufweist, da wiederum durch das sozusagen oben liegende Blech durchgeschweißt werden muß, bevor das entstehende Schmelzbad das "unten liegende" Blech erreicht. Weiterhin ist die Positionierung des Laserstrahls in der automatisierten Fertigung extrem schwierig, da die genaue Stelle, an der geschweißt werden muß, um die Vorteile der Formgestaltung der beiden aufeinander liegenden Bleche ausnutzen zu können, lageempfindlich ist. Auch ist die genaue Sollposition des Laserstrahls mit den bekannten optischen Führungsmitteln nicht lokalisierbar. Weiterhin ist dieses Verfahren insofern nachteilig, als die Krümmungsradien genau eingehalten werden müssen, da die angestrebten Vorteile sonst nicht erreicht werden. Wegen des Verschleißes der eingesetzten Werkzeuge wird die Toleranz, mit der die geforderten Krümmungsradien einzuhalten sind, jedoch bei ablaufender Standzeit des Werkzeuges unterschritten, so daß die Güte der industriell gefertigten Schweißnähte wiederum abnimmt.

Bei der zuletzt diskutierten Technik "kissing welded" ist weiterhin, wie auch bei dem zuvor diskutierten Verfahren, insbesondere nachteilig, daß die Schweißnaht nicht unmittelbar an der Kante eines der beiden Bleche entlanggeführt werden kann. Dies ist jedoch insbesondere im Karosseriebau häufig wünschenswert, nicht zuletzt aus optischen Gründen.

Aus der DE-OS 35 15 598 ist eine Verbindungsstelle zweier Dünnbleche bekannt, bei der ein Parallelstoß zweier aufeinander gelegter Bleche mit Hilfe einer lasergeschweißten Kehlnaht verbunden werden soll. Dieses Verfahren leidet an den eingangs erwähnten Nachteilen, d.h. die Schweißnaht wird bei zinkeschichteten Stahlblechen unzufriedenstellend ausfallen.

Auch die DE-PS 39 09 471 C1 befaßt sich mit der Entgasungsproblematik bei lasergeschweißten, beschichteten Blechen. In dieser Druckschrift wird vorgeschlagen, bei einem Überlappstoß zum Schweißen von beschichteten Werkstücken, insbesondere verzinkten Blechen, eine Rändelung des einen Werkstückes im Bereich der Schweißnaht vorzusehen, Abgesehen davon, daß diese Druckschrift dem Fachmann keinen Hinweis darauf gibt, wie eine Schweißung längs der Kante eines der Bleche auszuführen wäre, sind die vorgeschlagenen Rändelungen in einem eigenen Arbeitsschritt in das zu schweißende Blech einzuprägen, was mit hohen Kosten verbunden ist, die insbesondere im Bereich der industriellen Großfertigung nicht tragbar sind.

Auch die eingangs bereits diskutierte EP-PS 0 178 394 B1 offenbart in Figur 4 den Gedanken, bei einem Überlappstoß zweier Bleche, der von einem Laserstrahl durchgeschweißt wird, Rändelungen in Form eines gezackten Abschnittes vorzusehen, wodurch Kanäle geschaffen werden, die in Richtung der Schweißnaht parallel verlaufend ausgebildet sind. Eine solche Form von Ausnehmungen oder Zacken bzw. eine dadurch geschaffene Rändelung ist ersichtlich nicht dazu geeignet, die Entgasungsproblematik dann zu lösen, wenn ein Blech längs seiner Kante mit einem zweiten Blech verbunden werden soll.

Der Erfindung liegt daher die Aufgabe zugrunde, ein gattungsgemäßes Verfahren zum Verbinden zweier Stahlbleche, von denen zumindest eins eine Beschichtung mit einem niedrigen Schmelzpunkt aufweist, beispielsweise ein zinkbeschichtetes Stahlblech, so zu verbessern, daß die Ausbildung einer Laserschweißnaht insbesondere längs einer Kante eines Bleche ermöglicht wird, wobei die entstehende Laserschweißnaht von höchster Güte sein soll.

Einem weiteren nicht erfindungsgemäßen Aspekt liegt die Aufgabe zugrunde, ein Verfahren zum Besäumen eines tiefgezogenen Blechteils anzugeben, insbesondere eines Karosseriebauteils, das längs der Schnittkante mit einer Laserstrahl-Kehlnaht mit einem zweiten Blechbauteil verbunden werden soll, wobei zum Besäumen zwei scherend gegeneinander bewegte Schneidbacken verwendet werden, wobei die Schnittkante so ausgebildet wird, daß beim Aufsetzen auf das zweite Blechteil die Ausbildung einer erstklassigen Laserschweißnaht erst ermöglicht wird, oder aber das geschaffene Verfahren gemäß der Erfindung weiter verbessert wird.

Die Aufgabe wird erfindungsgemäß durch die Merkmale des Anspruchs 1 gelöst. Dabei ist vorteilhaft vorgesehen, daß der im Nahtbereich zwischen den beiden Blechen eingeschlossene Spitzenwinkel zwischen 7° und 15° beträgt. Im Hinblick auf die insbesondere vorgesehene Verwendung des Verfahrens in der Automobilindustrie zur Produktion von Rohkarosserien aus tiefgezogenen Blechteilen, ist vorgesehen, die Blechteile, die mit einer Laserschweißnaht nach dem erfindungsgemäßen Verfahren miteinander zu einem Karosseriebauteil verbunden werden sollen, bereits bei der Gestaltung des Blechteils so auszulegen, daß das längs seiner Stirnseite zu verschweißende Blechteil hinsichtlich seiner Formsteifigkeit im an die Schweißkante angrenzenden Nahtbereich im Hinblick auf das andere Blechteil, das längs seiner Oberfläche zu verschweißen ist, so ausgebildet ist, daß beim Verspannen der Bauteile mittels einer Klemmvorrichtung im zukünftigen Nahtbereich zwischen den Blechbauteilen ein Spitzenwinkel zwischen 7° und 15° eingeschlossen wird.

Das Blechteil, das längs seiner Stirnseite zu verschweißen ist, soll im folgenden unabhängig von seiner tatsächlichen Lage auch als "oberes" oder "erstes" Blechteil bezeichnet werden. Das Gegenstück, d.h. das Blechteil, das auf seiner Oberfläche zu verschweißen ist, soll im folgenden unabhängig von seiner tatsächlichen Lage auch als "unteres" oder "zweites" Blechteil bezeichnet werden.

Der Randbereich des beispielsweise eine Tiefziehpresse verlassenden ersten Blechteils ist also mit anderen Worten in Form einer etwa 1 bis 1 1/2 cm breiten Lippe unter einem solchen Winkel abgekantet oder abgewinkelt, daß beim Aufsetzen auf die Oberfläche des zweiten Blechbauteils und beim Belasten mit einer Klemmvorrichtung immer noch der gewünschte Spitzenwinkel zwischen 7° und 15° verbleibt. Dieser dient als Entgasungsbereich und gewährleistet so, daß die Zinkbeschichtung in gasförmiger Form entweichen kann, ohne das Schmelzbad der entstehenden Kehlnaht zu stören.

Daß durch das erfindungsgemäße Verfahren ermöglicht wird, Laserschweißnähte erstklassiger Güte unmittelbar an der Kante des ersten Blechteils anzubringen, hat verschiedene Vorteile. Insbesondere im Karosseriebau sind solche Nähte aus ästhetischen Gründen erwünscht. Zum andern ermöglicht die Schweißnahtlage unmittelbar an der Kante des ersten Blechbauteils eine elegante Automatisierung des Schweißvorganges. Der Laserstrahl läßt sich so nämlich mit optischen Führungsmitteln ausrichten, die sich unmittelbar an der Kante des ersten Blechbauteils orientieren. So kann beispielsweise vorgesehen sein, ein optisches Muster auf die Kante zu projizieren, beispielsweise fünf parallel zueinander angeordnete rechteckförmige Streifen. Aufgrund des durch die Kante gebildeten Versatzes in Projektionsrichtung wird das projizierte Muster in charakteristischer Weise verzerrt, was eine Information darstellt, die zum Führen des die Kehlnaht erzeugenden Laserstrahl ausgenutzt werden kann.

Die angesprochene Klemmvorrichtung kann insbesondere in eine Schweißlehre integriert sein, wie sie beispielsweise in der industriellen Rohkarosserieproduktion bei der Fertigung von Türen oder Klappen für Automobilkarosserien eingesetzt wird.

Hinsichtlich einer weiteren vorteilhaften Ausführungsform der Erfindung ist vorgesehen, daß bei einem Verfahren zum Besäumen eines tiefgezogenen Blechteils, das als oberes oder erstes Blechteil fungieren soll, und das somit längs der Schnittkante mit einer Laserstrahl-Kehlnaht mit dem zweiten Blechteil verbunden werden soll, wobei zum Besäumen zwei scherend gegeneinander bewegte Schneidbacken verwendet werden, erfindungsgemäß Ausbrüche an der Schneidkante zumindest einer der Schneidbacken anzubringen, so daß längs der Schnittkante des besäumten Blechbauteils Zähne ausgebildet werden. Hürbei werden an der Schnittkante des Bleches bereits während des Schneidens, d.h. bei einem notwendigen Bearbeitungsschritt, nicht hingegen in einem gesonderten Bearbeitungsschritt, Mittel geschaffen, die beim Aufsetzen der Schnittkante auf die Oberfläche eines zweiten Blechteils Entgasungskanäle erzeugen, die quer zur Schweißrichtung verlaufend angeordnet sind. Wie versuche ergeben haben, wird durch eine solcherart behandelte Schnittkante bereits ermöglicht, eine Kehlnaht an zwei Blechen mit erstklassiger Güte anzubringen, selbst wenn diese in Form eines Überlappstoßes parallel zueinander angeordnet sind.

Bei einer bevorzugten Ausführungsform haben die an der besäumten Kante des an seiner Stirnseite zu verschweißenden Blechbauteils, d.h. ersten oder oberen Blechbauteils ausgeformten Zähnchen eine Höhe zwischen 5/100 und 5/10 mm. Es hat sich nämlich herausgestellt, daß streckenweise vorhandende Spalte, d.h. quer zur Schweißrichtung verlaufende Entgasungskanäle mit einer Höhe von lediglich 5/100 mm bereits ausreichend sind, um die oben geschilderte Entgasungsproblematik zu lösen, wenn zur blechseitigen Richtung der Schweißnaht hin ein Entgasungsraum vorgesehen ist, wie er durch den spitzen Winkel, der erfindungsgemäß vorgeschlagen wird, geschaffen wird.

Bei einer weiter bevorzugten Ausführungsform der Erfindung ist vorgesehen, daß dem optisch über die untere, d.h. zu verschweißende Kante geführten Laserstrahl, d.h. dem Lasertrahl, der die Kehlnaht erzeugend über den Schrägstoß geführt wird, ein zweiter Strahl vor- oder nachläuft, der auf die freie Kante des oberen, d.h. stirnseitig zu verschweißenden Bleches gerichtet ist. Hierdurch wird erreicht, daß die freiliegende Kante verrundet wird. Dies ist von höchstem Vorteil dann, wenn vorgesehen ist, die miteinander verschweißten Bleche zu lackieren, wie es gemein hin bei Automobilkarosserien geschieht. Ohne diese Verrundung kommt es nämlich zu einer sogenannten "Lackflucht", d.h. der aufzutragende Lack zieht sich aufgrund seiner Oberflächenspannung oder anderer intermolekularer Kräfte von der scharfen Kante zurück, was zu einer äußerst dünnen Lackschicht im Bereich vom 3 µm führt. Eine solch dünne Lackschicht ist nicht ausreichend korrosionssicher und damit insbesondere im Automobilbau unerwünscht.

Besonders vorteilhaft ist vorgesehen, daß die Laserstrahlen durch einen Nd:YAG-Laser erzeugt werden. Diese Laserbauform ist insofern vorteilhaft, als die erzeugte Wellenlänge im Bereich von 1 µm durch Glasfaserkabel leitbar ist und durch gläserne Linsen oder Linsen aus anderen transmissiven Medien fokussiert werden kann. Hierdurch wird der Einsatz insbesondere zur Ausbildung von Kehlnähten vereinfacht, bei denen häufig unter beengten Platzverhältnissen geschweißt werden muß.

Die Erfindung wird im folgenden anhand von in der Zeichnung dargestellten Ausführungsbeispielen näher erläutert. In der Zeichnung zeigen:
- Figur 1 -: zwei erfindungsgemäß unter einem spitzen Winkel aufeinander stoßend angeordnete Stahlbleche,
- Figur 2 -: zwei im Überlappstoß zueinander angeordnete Stahlbleche gemäß dem Stand der Technik,
- Figur 3 -: einen Ausschnitt aus dem Querschnitt durch den Dachkanal einer Kraftfahrzeugkarosserie,
- Figur 4 -: eine Schneidbacke zur Verwendung bei einem Verfahren zum Besäumen von Blechteilen zur Vorbereitung auf eine Schweißnaht,
- Figur 5 -: alternative Ausführungsformen der in der Schneidbacke gemäß Figur 4 vorgesehenen Ausbrüche,
- Figur 6 -: eine erfindungsgemäße Schweißnaht mit zusätzlicher Kantenverrundung im Schnitt,
- Figur 7 -: eine erfindungsgemäße Schweißnaht ohne Kantenverrundung,
- Figur 8 -: die Schweißnaht gemäß Figur 6 nach dem Lakkieren,
- Figur 9 -: die Schweißnaht gemäß Figur 7 nach dem Lakkieren, und
- Figur 10 -: eine schematische Darstellung einer weiteren Ausführungsform des erfindungsgemäßen Verfahrens.

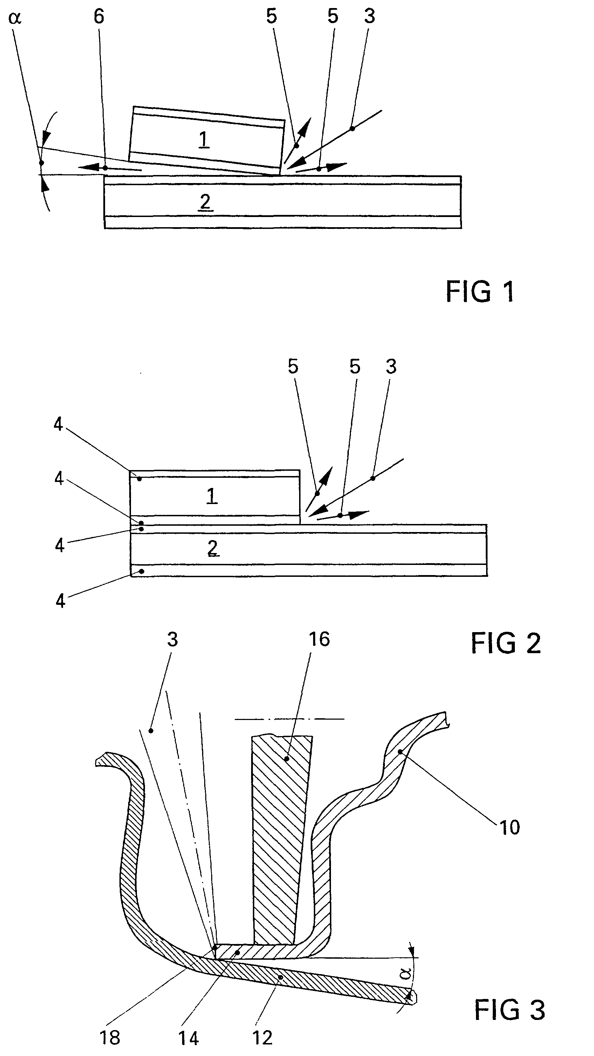

Figur 2 zeigt gemäß dem Stand der Technik zwei in Form eines Überlappstoßes aufeinander angeordnete Stahlbleche 1 und 2. Das erste Stahlblech wird im Rahmen dieser Beschreibung auch als oberes Stahlblech bezeichnet, unabhängig davon, ob es im Hinblick auf die Schwerkräfte tatsächlich oben liegt oder nicht. Das Stahlblech 1 soll mittels einer Kehlnaht mit dem unterem Stahlblech 2 verschweißt werden. Dabei wird das Stahlblech 1 längs seiner Stirnseite verschweißt, während das Stahlblech 2 längs seiner Oberfläche verschweißt wird. Zur Erzeugung der Laserstrahl-Kehlnaht wird ein Laserstrahl 3 längs der Kehle geführt. Da die Stahlbleche 1 und 2 jeweils eine Zinkbeschichtung 4 aufweisen, verdampft diese zunächst und entweicht in Richtung der gezeichneten Pfeile 5. Da nur ein Entgasungsweg offen steht, wird die durch den Laserstrahl 3 erzeugte Stahlschmelze gestört, so daß Krater entstehen.

Figur 1 zeigt zwei erfindungsgemäß unter einem spitzen Winkel α von etwa 7° bis 15° angeordnete Stahlbleche 1 und 2. Wird hier eine Kehlnaht durch einen Laserstrahl 3 erzeugt, so steht zusätzlich der durch den Pfeil 6 symbolisierte Entgasungsweg offen. Die entstehenden Zinkdämpfe können also auch in blechseitiger Richtung abziehen, wodurch eine Laserstrahl-Kehlnaht von einwandfreier Güte gewährleistet ist.

Figur 3 zeigt einen Querschnitt durch einen Teil des sogenannten Dachkanals bei Kraftfahrzeugkarosserien, einem bevorzugten Anwendungsfall für das erfindungsgemäße Laserschweißverfahren. Ein Dachbauteil 10 soll mit dem die Dachleiste bildenden Bauteil 12 verschweißt werden. Erfindungsgemäß ist vorgesehen, daß die Querschnittsform der Teile 10 und 12 so aufeinander abgestimmt ist, daß die Teile einen spitzen Winkel α miteinander einschließend angeordnet werden können. Dabei wird bei der Auslegung insbesondere der Winkelstellung einer zum Verschweißen vorgesehenen Lippe 14 des Dachteiles 10 diese so dimensioniert werden, daß beim Verspannen der Teile gegeneinander in einer Schweißlehre die notwendigen Klemmittel 16, hier in Form einer kontinuierlich bewegten Rolle, die elastischen Teile so verformen, daß genau der gewünschte Spitzenwinkel α eingestellt wird, d.h. insbesondere zwischen 7° und 15° beträgt. Beim Erzeugen der Kehlnaht durch den Laserstrahl 3 können die entstehenden Zinkdämpfe in Richtung des Spitzenwinkels α zusätzlich abziehen, wodurch eine einwandfreie Laserschweißnaht gewährleistet wird.

Die Kontur, d.h. die Querschnittsform, des Dachbauteils 10 ist in einer Tiefziehpresse festgelegt worden. In der Tiefziehpresse wird eine Platine bearbeitet, deren Abmessungen geringfügig größer sind als die Abmessungen des Dachbauteiles 10. Es ist daher notwendig, die Stirnfläche 18 durch Besäumen des tiefgezogenen Blechbauteiles, d.h. des Dachbauteiles 10 zu fertigen. Dabei werden gegeneinander scherende Schneidbacken verwendet.

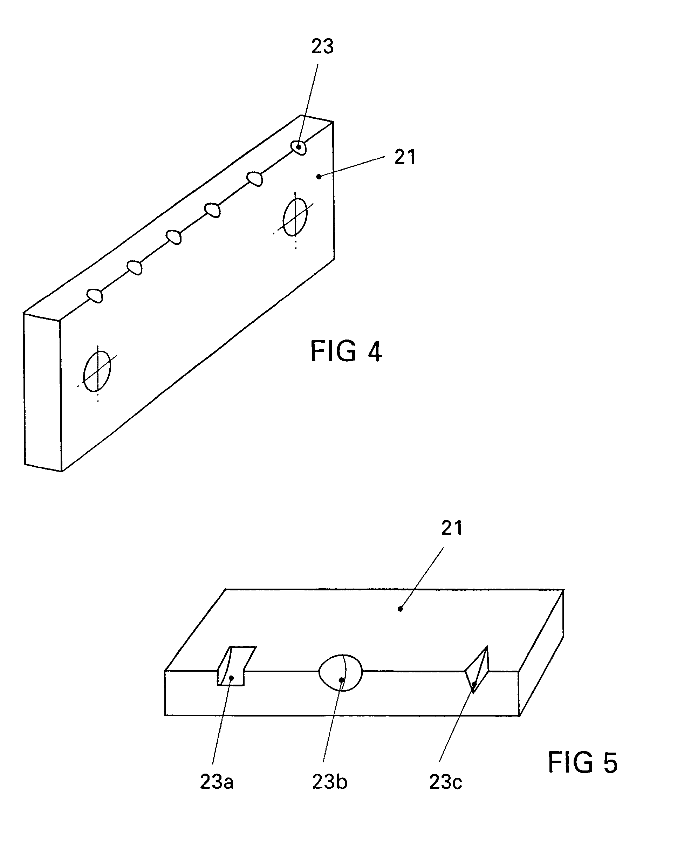

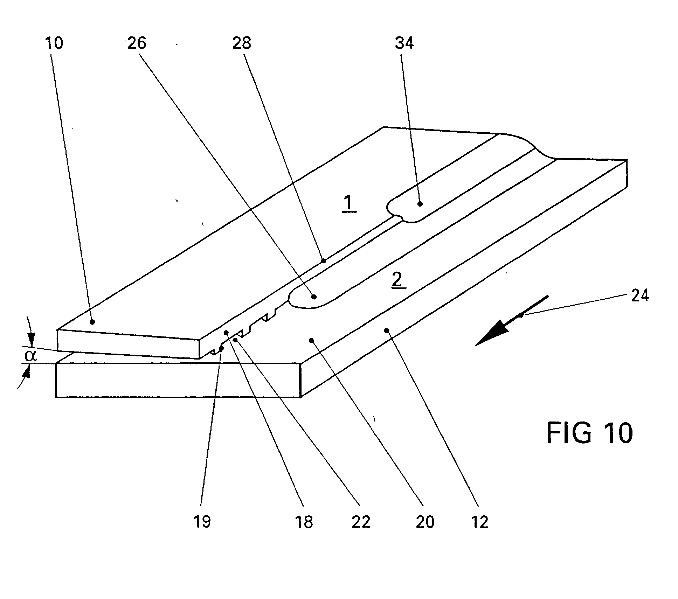

Wird eine Schneidbacke 21 gemäß Figur 4 verwendet, bei der in der Schneidkante kleine Ausbrüche 23 angeordnet sind, so werden während des Schneidvorganges an der Schnittkante des Blechbauteils, in diesem Fall des Dachbauteils 10, kleine Zähnchen 19 erzeugt, so daß die Schnittkante wie in Figur 10 gezeigt mittels der kleinen Zähnchen 19 auf der Oberfläche 20 des zweiten Bauteiles 12 aufliegt. Auf diese Weise werden Entgasungskanäle 22 gebildet, die quer zur Schweißrichtung ausgerichtet sind. Die Schweißrichtung wird durch den Pfeil 24 symbolisiert, wobei es unerheblich ist, ob der die Kehlnaht 26 erzeugende Laserschweißstrahl über den Schrägstoß geführt wird, oder ob das zu bearbeitende Werkstück gegenüber dem feststehenden Laserstrahl geführt wird.

Figur 5 zeigt alternative Ausführungsformen 23a, 23b und 23c der in der Schneidkante der Schneidbacke 21 anzuordnenden Ausbrüche.

Wird wie in Figur 10 dargestellt erfindungsgemäß lediglich die Kehlnaht 26 hergestellt, so verbleibt die freiliegende Kante 28 des oberen Blechbauteils, d.h. des Dachbauteils 10.

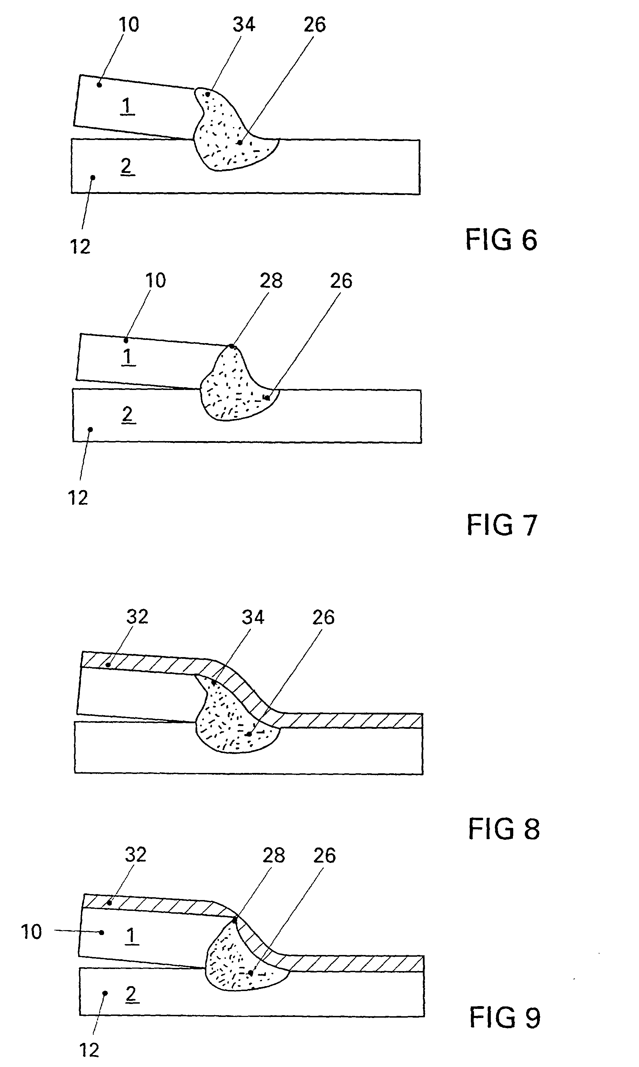

Figur 7 zeigt einen Schnitt durch die lasererzeugte Kehlnaht 26 gemäß Figur 10. Die freiliegende Kante 28 des oberen Blechteile 1, d.h. des Dachbauteils 10 würde, ließe man sie unbehandelt, beim Lackieren zu einem Verlauf der Lackschicht 32 führen, wie in Figur 9 dargestellt ist. Figur 9 zeigt die sogenannte Lackflucht im Bereich der scharfen Kante 28, die zu einer deutlich dünneren Lackschicht in diesem Bereich führt, als für einen Korrosionsschutz notwendig ist.

Wie Figur 10 zeigt, kann Abhilfe geschaffen werden, indem ein zweiter Laserstrahl über die freiliegende Kante 28 geführt wird und diese zum Schmelzen bringt. Es entsteht so anstelle der scharfen Kante 28 eine zusätzliche Schweißraupe 34, die zu einer Querschnittsform der gesamten Schweißnaht führt, wie sie in Figur 6 dargestellt ist. Wird die in gemäß Figur 6 dargestellte Schweißnaht lackiert, so wird eine Lackschicht ausgebildet, wie sie in Figur 8 dargestellt ist, d.h. mit gleichmäßigen Dickenverlauf.

Die erfindungsgemäß vorgeschlagenen Maßnahmen ermöglichen es eine Laserschweißnaht höchster Güte im Rahmen der industriellen Verarbeitung, insbesondere zinkbeschichteter Stahlbleche, herzustellen.

## Patentansprüche

1. Verfahren zum Verbinden zweier Stahlbleche (1, 2, 10, 12), von denen zumindest eines auf der dem anderen Stahlblech zugewandten Seite eine Beschichtung (4) mit einem niedrigen Schmelzpunkt aufweist, durch eine Laserschweißnaht, wobei die Bleche vor Verschweißen im Nahtbereich unter einem spitzen Winkel (α) aufeinander stoßend angeordnet werden, **dadurch gekennzeichnet, dass** die Schweißnaht als Kehlnaht ausgebildet wird und eines der Bleche längs seiner Stirnseite mit dem anderen verschweißt wird.

2. Verfahren nach Anspruch 1, **dadurch gekennzeichnet, dass** der im Nahtbereich zwischen den beiden Blechen eingeschlossene Spitzenwinkel (α) zwischen 7° und 15° beträgt.

3. Verfahren nach einem der Ansprüche 1 oder 2, verwandt zum Fügen von tiefgezogenen Blechteilen (10, 12), insbesondere zinkbeschichteten Karosseriebauteilen, **dadurch gekennzeichnet, dass** die Querschnittsform der miteinander zu verbindenden Teile (10, 12) speziell im Nahtbereich so gestaltet sind, dass nach Anlegen einer Vorspannkraft mittels einer Klemmvorrichtung (16) ein definierter Spitzenwinkel (α) zwischen den beiden Blechen eingeschlossen wird.

4. Verfahren nach einem der Ansprüche 1 bis 3, **dadurch gekennzeichnet, dass** die Schnittkante des längs seiner Stirnseite (18) verschweißten Blechbauteils (10) Zähnchen (19) aufweist, die mit einem Verfahren zum Besäumen eines tiefgezogenen Blechteils, insbesondere Karosseriebauteils, das längs der Schnittkante mit einer Laserstrahl-Kehlnaht mit einem zweiten Blechteil verbunden werden soll, wobei zum Besäumen zwei scherend gegeneinander bewegte Schneidbacken (21) verwendet werden, wobei die Schneidkante zumindest einer der Schneidbacken Ausbrüche (23) aufweist, so dass längs der Schnittkante (18) des besäumten Blechbauteils (10) Zähne (19) ausgebildet werden, hergestellt worden sind.

5. Verfahren nach Anspruch 4, **dadurch gekennzeichnet, dass** die Ausbrüche (23) prismenförmig sind.

6. Verfahren nach Anspruch 4 oder 5, **dadurch gekennzeichnet, dass** die an der besäumten Kante (18) des an seiner Stirnseite (18) zu verschweißenden Bauteils (10) ausgeformten Zähnchen (19) eine Höhe zwischen 5/100 und 5/10 mm haben.

7. Verfahren nach einem der Ansprüche 1 bis 3, bei dem ein erster Strahl (3) die Kehlnaht (26) erzeugend über den Schrägstoß geführt wird, **dadurch gekennzeichnet, dass** ein zweiter Strahl auf die freie Kante (28) des stirnseitig verschweißten Bleches gerichtet ist, um diese zu verrunden.

8. Verfahren nach Anspruch 7, **dadurch gekennzeichnet, dass** der zweite Strahl dem ersten Strahl (3) synchron mit konstantem Abstand vor- oder nachgeführt wird.

9. Verfahren nach einem der Ansprüche 1 bis 8, **dadurch gekennzeichnet, dass** der Laserstrahl durch einen Nd:YAG-Laser erzeugt wird.

10. Blechbauteil, insbesondere Karosseriebauteil, **dadurch gekennzeichnet, dass** zumindest zwei aus dünnem Blech tiefgezogene Bauteile (10, 12) mittels einer Schweißnaht verbunden sind, die mit einem Verfahren nach einem oder mehreren der Ansprüche 1 bis 9 hergestellt ist, wobei zumindest ein Blech auf der dem anderen Blech zugewandten Seite eine Beschichtung (4) mit einem niedrigen Schmelzpunkt aufweist, die Bleche vor Verschweißen im Nahtbereich unter einem spitzen Winkel (α) aufeinander stoßend angeordnet werden und die Schweißnaht als Kehlnaht ausgebildet wird und eines der Bleche längs seiner Stirnseite mit dem anderen verschweißt wird.

## Claims

1. Method for connecting two steel sheets (1, 2, 10, 12), of which at least one comprises a coating (4) with a low melting point on the side facing the other steel sheet, via a laser weld seam, wherein, prior to welding, the metal sheets are arranged so as to abut one another at an acute angle (α) in the seam region, **characterised in that** the weld seam is configured as a fillet weld and one of the metal sheets is welded to the other along its front face.

2. Method according to claim 1, **characterised in that** the acute angle (α) enclosed between the two metal sheets in the region of the seam is between 7° and 15°.

3. Method according to one of claims 1 or 2, used for joining deep-drawn sheet-metal parts (10, 12), in particular zinc-coated vehicle-body components, **characterised in that** the cross-sectional shape of the parts (10, 12) to be connected to one another, specifically in the seam region, is configured such that, after applying a biasing force by means of a clamping device (16), a defined acute angle (α) is enclosed between the two metal sheets.

4. Method according to one of claims 1 to 3, **characterised in that** the cutting edge of the sheet-metal component (10) welded along its front face (18) comprises small teeth (19), which were produced by a method of trimming a deep-drawn sheet-metal part, in particular a vehicle-body component, which is to be connected to a second sheet-metal part by means of a laser fillet weld along the cutting edge, wherein two cutting jaws (21) moved in scissor fashion relative to one another are used for trimming, wherein the cutting edge of at least one of the cutting jaws comprises indentations (23), such that teeth (19) are formed along the cutting edge (18) of the trimmed sheet-metal component (10).

5. Method according to claim 4, **characterised in that** the indentations (23) are prism shaped.

6. Method according to claim 4 or 5, **characterised in that** the teeth (19) shaped on the trimmed edge (18) of the component (10) to be welded on its front face (18) have a height of between 5/100 and 5/10 mm.

7. Method according to one of claims 1 to 3, in which a first beam (3) producing the fillet weld (26) is guided over the bevelled joint, **characterised in that** a second beam is directed at the free edge (28) of the metal sheet welded by its front face in order to round said free edge.

8. Method according to claim 7, **characterised in that** the second beam synchronously precedes or follows the first beam (3) at a constant interval.

9. Method according to one of claims 1 to 8, **characterised in that** the laser beam is generated by a Nd:YAG laser.

10. Sheet-metal component, in particular a vehicle-body component, **characterised in that** at least two components (10, 12) deep-drawn from thin metal sheet are connected by means of a weld seam, which is produced by a method according to one or more of claims 1 to 9, wherein at least one metal sheet comprises a coating (4) with a low melting point on the side facing the other metal sheet, wherein, prior to welding, the metal sheets are arranged so as to abut one another at an acute angle (α) in the seam region and the weld seam is configured as a fillet weld and one of the metal sheets is welded to the other along its front face.

## Revendications

1. Procédé de jonction de deux tôles d'acier (1, 2, 10, 12) dont au moins une présente, sur le côté orienté vers l'autre tôle d'acier, un revêtement (4) ayant un point de fusion faible, par l'intermédiaire d'un joint soudé au laser, dans lequel les tôles, avant le soudage, sont aboutées les unes sur les autres au niveau de la zone de soudure selon un angle aigu (α), **caractérisé en ce que** la soudure est configurée sous la forme d'une soudure d'angle et qu'une des tôles est soudée à l'autre tôle le long de sa face frontale.

2. Procédé selon la revendication 1, **caractérisé en ce que** l'angle au sommet (α) formé dans la zone de soudure entre les deux tôles est compris entre 7° et 15°.

3. Procédé selon l'une quelconque des revendications 1 ou 2, utilisé pour l'assemblage de pièces de tôle (10, 12) ayant fait l'objet d'un emboutissage profond, en particulier des composants de carrosserie revêtus de zinc, **caractérisé en ce que** la forme en coupe des parties à relier (10, 12) est formée de manière spécifique au niveau de la zone de soudure, de telle sorte qu'après l'application d'une force de précontrainte au moyen d'un dispositif de serrage (16), un angle au sommet défini (α) existe entre les deux tôles.

4. Procédé selon l'une quelconque des revendications 1 à 3, **caractérisé en ce que** l'arête de coupe du composant en tôle (10) soudé le long de sa face frontale (18) présente des petites dents (19), apparaissant grâce à un procédé de rognage d'une pièce de tôle ayant fait l'objet d'un emboutissage profond, en particulier d'un composant de carrosserie, qui doit être relié à une deuxième pièce de tôle le long de l'arête de coupe au moyen d'une soudure d'angle réalisée avec un faisceau laser, moyennant quoi on utilise, pour rognage, deux becs à pointes (21) mobiles l'un par rapport à l'autre avec un cisaillement, moyennant quoi l'arête de coupe d'au moins l'un des becs à pointes présente des évidements (23), de telle sorte que des dents (19) soient formées le long de l'arête de coupe (18) du composant en tôle rogné (10).

5. Procédé selon la revendication 4, **caractérisé en ce que** les évidements (23) sont de forme pyramidale.

6. Procédé selon l'une quelconque des revendications 4 ou 5, **caractérisé en ce que** les petites dents (19) formées sur l'arête rognée (18) du composant (10) à souder sur sa face frontale (18) ont une hauteur comprise entre 5/100 et 5/10 mm.

7. Procédé selon l'une quelconque des revendications 1 à 3, dans lequel on amène un premier faisceau (3) générant la soudure d'angle (26) au-dessus de l'assemblage en T oblique, **caractérisé en ce qu'**un second faisceau est orienté vers l'arête libre (28) de la tôle soudée sur la face frontale, pour arrondir celle-ci.

8. Procédé selon la revendication 7, **caractérisé en ce que** le second faisceau est acheminé en amont ou en aval du premier faisceau (3), de manière synchrone et à une distance constante.

9. Procédé selon l'une des revendications 1 à 8, **caractérisé en ce que** le faisceau laser est généré par un laser Nd:YAG.

10. Composant en tôle, en particulier composant de carrosserie, **caractérisé en ce qu'**au moins deux composants (10, 12) d'une tôle mince ayant fait l'objet d'un emboutissage profond sont assemblés par une soudure, qui est obtenue selon un procédé décrit dans une ou plusieurs des revendications 1 à 9, dans lequel au moins une tôle, sur un des côtés orienté vers l'autre tôle, présente un revêtement (4) ayant un point de fusion faible, les tôles, avant le soudage, étant aboutées les sur les autres au niveau de la zone de soudure selon un angle aigu (α), et la soudure formant une soudure d'angle et une des tôles étant soudée à l'autre tôle le long de sa face frontale.
